# EUROPÄISCHE PATENTSCHRIFT

(11) **EP 2 924 417 B1**
(45) Veröffentlichungstag und Bekanntmachung des Hinweises auf die Patenterteilung: **13.01.2021**
(21) Anmeldenummer: 15401021.9
(22) Anmeldetag: 17.03.2015
(51) Int. Cl.: G01N 15/02, B01L 3/00, G01N 21/03

(54) **VERFAHREN UND VORRICHTUNG ZUM BESTIMMUNG DER KORNGRÖSSE EINES DÜNGERS**
METHOD AND DEVICE FOR DETERMINING THE GRANULE SIZE OF A FERTILISER
PROCÉDÉ ET DISPOSITIF DE DÉTERMINATION DE LA GROSSEUR DE GRAIN D'UN ENGRAIS

(30) Priorität: 24.03.2014 DE 102014103963
(43) Veröffentlichungstag der Anmeldung: 30.09.2015
(73) Patentinhaber: Amazonen-Werke H. Dreyer GmbH & Co. KG, 49205 Hasbergen (DE)
(72) Erfinder: Scheufler, Bernd, 49205 Hasbergen (DE); Rahe, Florian, 49504 Lotte (DE)

(56) Entgegenhaltungen:
- EP-A1- 1 662 247
- WO-A1-98/14046
- CN-U- 202 322 837
- US-A- 4 975 863
- US-A- 5 912 729
- US-A1- 2004 151 360

## Beschreibung

Die Erfindung betrifft ein Verfahren zur Bestimmung der Korngröße eines Düngers, ein Verfahren zum Ermitteln einer Einstellempfehlung für einen Düngerstreuer, ein digitales Programm zum Ausführen wenigstens eines dieser Verfahren, eine Messschale zum Ausbilden einer einlagigen Kornschicht eines Düngers und eine Vorrichtung zum Bestimmen der zugehörigen Korngröße.

Beim Ausstreuen von Dünger auf Ackerflächen mittels rotierender Streuscheiben oder dergleichen spielt das Flugverhalten der Düngerkörner eine entscheidende Rolle für die auf der Ackerfläche erzeugte Düngerverteilung. Ein Leitparameter zur Ermittlung des Flugverhaltens der Düngerkörner ist die Korngröße des Düngers, beispielsweise angegeben als mittlere Korngröße der Düngerkörner, als Korngrößenspektrum oder dergleichen. Je nach vorliegender Korngröße lassen sich dann für Düngerstreuer und Streuscheiben Einstellempfehlungen angeben, um die Körner eines bestimmten Düngers über einen vorgegebenen Arbeitsbereich gezielt zu verteilen.

Je nach Herkunft des Düngers kann es jedoch vorkommen, dass ausreichende und/oder zuverlässige Informationen zur Korngröße oder zum Korngrößenspektrum fehlen. Es ist dann gängige Praxis, eine Düngerprobe an einen zentralen Düngeservice zu schicken und die mittlere Korngröße und/oder das Korngrößenspektrum analysieren zu lassen. Auf dieser Grundlage können dann ebenso Einstellempfehlungen für Düngerstreuer und Streuscheibe gegeben werden. Nachteilig ist jedoch der dafür benötigte Zeitaufwand. Ebenso können sich Düngersorten eines Herstellers je nach Charge unterscheiden, so dass man das Analysenergebnis einer früheren Charge nicht bedenkenlos übernehmen kann. Andererseits ist der Aufwand für das Analysieren einzelner Chargen erheblich.

Als Abhilfe schlägt die EP 0567495 B2 einen mobilen Prüfstand für Dünger vor, bei dem verschiedene physikalische Streueigenschaften an einzelnen Stationen vor Ort gemessen und mittels digitaler Datenverarbeitung erfasst und ausgewertet werden. Zur Bestimmung des Korngrößenspektrums wird eine Prüfstation mit mehreren Sieben vorgeschlagen, mit denen der Dünger nach Korngrößen klassifiziert wird, um die resultierenden Kornfraktionen dann einzeln auszuwiegen. Zwar entfällt der Versand von Düngerproben. Andererseits ist der apparative Aufwand erheblich, ebenso die für die Messung und Auswertung benötigte Zeit.

Als Alternative beschreibt die DE 19749221 C2 ein Verfahren zur Klassifizierung von Düngern, bei dem Dünger unterschiedlicher Korngröße nach Düngersorten geordnet auf Vergleichstafeln oder dergleichen abgebildet sind, um dem Anwender einen visuellen Vergleich mit dem auszubringenden Dünger zu ermöglichen. Nachteilig sind jedoch zum Einen die subjektive Auswertung an sich und zum Anderen der Bedarf für eine umfassende und zugleich zielgerichtete Vorauswahl der Vergleichsabbildungen. Das Risiko, aus dem visuellen Vergleich eine für den verwendeten Düngerstreuer ungeeignete Einstellempfehlung abzuleiten, ist daher relativ hoch.

Die US 5,912,729 A beschreibt eine Schale, welche geeignet ist zur Ermittlung der Porengröße eines Schaums. Die CN202322837 U beschreibt eine Schale mit einem partiell gefärbten Boden, welche zur Untersuchung von Pilzproben geeignet ist.

Die US 2004/151360 A1 offenbart ferner ein Verfahren zur Bestimmung der Korngröße eines Düngers, insbesondere Harnstoffdüngers, mit den Schritten: Verteilen eines Probenvolumens des Düngers auf einer Messfläche zu einer einlagigen Kornschicht; Abbilden der Messfläche mit der einlagigen Kornschicht in wenigstens einem digitalen Kamerabild; und Berechnen der Korngröße.

Es besteht somit der Bedarf für Verfahren und Vorrichtungen zur Bestimmung der Korngröße eines Düngers, und insbesondere zum Ermitteln einer Einstellempfehlung für einen Düngerstreuer auf dieser Grundlage, um wenigstens eines der oben genannten Probleme zu beheben oder zumindest abzumildern.

Die gestellte Aufgabe wird mit einem Verfahren nach Anspruch 1 gelöst. Demnach umfasst dieses die Schritte:
a) Abmessen eines Probenvolumens des Düngers;
b) Einfüllen des Probenvolumens in eine Messschale mit einer eine Messfläche begrenzenden Umrandung, und Verteilen des Probenvolumens auf der Messfläche zu einer einlagigen Kornschicht;
c) Abbilden der umrandeten Messfläche mit der einlagigen Kornschicht in wenigstens einem digitalen Kamerabild;
d) Berechnen einer von wenigstens einem Düngerkorn, insbesondere der von der einlagigen Kornschicht, im Kamerabild bedeckten Fläche; und
e) Berechnen der Korngröße, insbesondere einer mittleren Korngröße und/oder eines Korngrößenspektrums des Düngers, aus dem abgemessenen Probenvolumen mittels Größenvergleich der bedeckten Fläche und der Messfläche.

Dem erfindungsgemäßen Verfahren liegt die Erkenntnis zugrunde, dass ein bestimmtes Volumen eines feinkörnigen Düngers bei einlagiger Verteilung eine größere Fläche bedeckt als das gleiche Volumen eines Düngers gröberer Körnung. Wird ein bestimmtes Probenvolumen mit Düngerkörnern zu einer einzigen Lage auf einer im Wesentlichen ebenen Messfläche bekannter Größe verteilt, so lässt sich aus dem von der Düngerprobe bedeckten Flächenanteil mittels einer Korrelationsfunktion auf die Korngröße des Düngers schließen. Die Korrelationsfunktion kann beispielsweise empirisch ermittelt werden und/oder auf geometrischen Modellen für die Düngerkörner beruhen, insbesondere auf Modellen zur zweidimensionalen und dreidimensionalen Kugelpackung. Aus dem von der einlagigen Kornschicht bedeckten Flächenanteil lässt sich dann insbesondere die mittlere Korngröße des Düngers berechnen. Eine Lokalisierung und Vermessung einzelner Düngerkörner ist somit entbehrlich.

Das Probenvolumen des Düngers lässt sich beispielsweise mit einem Messbecher, Messlöffel oder dergleichen auf einfache Weise abmessen. Das Probenvolumen lässt sich vom Anwender beispielsweise durch Rütteln der Messschale zu einer einlagigen Kornschicht verteilen. Hierbei ist die Umrandung vorzugsweise als Seitenwand vollumfänglich um die Messfläche ausgebildet. Dies verhindert, dass Düngerkörner von der Messfläche fallen.

Die Düngerkönner können durch Verkippen der Messschale gegen die Seitenwand geschüttet werden, um die einlagige Kornschicht möglichst kompakt auszubilden. Die erfindungsgemäße Umrandung kann nichtsdestoweniger wenigstens eine auf der Messfläche entlang ihres Umfangs, beispielsweise mittels Aufdruck, ausgebildete Hilfslinie umfassen. Ebenso ist eine Segmentierung der Messschale in wenigstens zwei erfindungsgemäße Messflächen mittels derartiger Hilfslinien denkbar. Beispielsweise um ein vergleichweise kleines Probenvolumen in vorteilhafter Weise nur auf einem geeignet dimensionierten Teilbereich der Messschale zu verteilen und abzubilden.

Die erfindungsgemäße Umrandung erleichtert einen Größenvergleich zwischen der für die Größenbestimmung verwendeten Messfläche und der von der einlagigen Kornschicht bedeckten Fläche in einem Kamerabild, wobei die verwendete Messfläche dann vorzugsweise vollständig in einem einzelnen Kamerabild abgebildet wird. Ein zusätzlicher Größenmaßstab ist bei der Berechnung der vom Dünger bedeckten Fläche somit entbehrlich.

Geeignete digitale Kamerabilder lassen sich beispielsweise mit entsprechend ausgestatteten Mobiltelefonen oder dergleichen erzeugen. Die Berechnung des von der einlagigen Kornschicht bedeckten Flächenanteils erfolgt mittels Bildauswertung. Die bedeckte Fläche wird insbesondere anhand eines geeigneten Helligkeitkontrasts und/oder Farbkontrasts zwischen dem Dünger und der Messfläche im Kamerabild abgegrenzt und berechnet.

Je nach Art der benötigten Korngrößenbestimmung und/oder der Leistungsfähigkeit der Bildverarbeitung lassen sich auch einzelne Düngerkörner lokalisieren und vermessen. Die Korngröße wird mittels einer zuvor berechneten und/oder empirisch ermittelten Korrelationsfunktion aus dem jeweils bedeckten Flächenanteil berechnet. Hierbei lassen sich perspektivische Verzerrungen und/oder durch den Abbildungsstrahlengang, beispielsweise bei Weitwinkelaufnahmen, verursachte Verzerrungen der einzelnen Kamerabilder berücksichtigen, um die abgedeckte Fläche möglichst exakt zu bestimmen. Rechteckige Messflächen und Umrandungen erleichtern das Berücksichtigen perspektivischer und/oder durch das Kameraobjektiv verursachter Verzerrungen im Kamerabild.

Das erfindungsgemäße Verfahren eignet sich insbesondere für Harnstoffdünger. Aufgrund ihrer einheitlichen chemischen Zusammensetzung unterscheiden sich Harnstoffdünger generell nur geringfügig hinsichtlich ihrer Oberflächenbeschaffenheit und hinsichtlich des Reibverhaltens einzelner Düngerkörner. Somit ist die Korngröße oder Korngrößenverteilung von Harnstoffdünger besonders aussagekräftig für das zu erwartende Flugverhalten beim Ausstreuen.

Vorzugsweise unterscheidet sich der Dünger von der Messfläche, und insbesondere auch von der Umrandung, hinsichtlich Farbe und/oder Graustufe. Ferner wird ein dadurch verursachter Bildkontrast im Schritt d) ausgewertet. Dies vereinfacht die Berechnung der bedeckten Fläche bei wechselnden Beleuchtungsverhältnissen und/oder bei Schattenwurf.

Vorzugsweise werden die Schritte c) bis e) mit einem mobilen Rechner, insbesondere in einem programmierbaren Mobilfunkgerät, ausgeführt. Dies ermöglicht eine flexible Anwendung vor Ort durch den Anwender. Programmierbare Mobilfunkgeräte, insbesondere Mobiltelefone, umfassen üblicherweise eine Kamera und lassen sich flexibel mit Applikationen programmieren. Ebenso lassen sich Bilddaten und Berechnungsdaten mittels standardisierter Schnittstellen schnell und unkompliziert drahtlos übermitteln. Das erfindungsgemäße Verfahren lässt sich jedoch auch mittels separater mobiler Kameras und Rechner, wie beispielsweise Notebooks oder Tablet-PC, und/oder mittels stationärer Auswertestationen, Datenbanken, Netzwerken oder dergleichen durchführen.

Bei einer weiteren günstigen Ausführungsform werden im Schritt c) gewonnene Bilddaten, insbesondere mittels Mobilfunk, an einen zentralen Düngeservice-Server übermittelt, wobei dieser wenigstens einen der Schritte d) und e) ausführt. Auf diese Weise lassen sich besonders komplexe Bildanalysen und Auswerteverfahren durchführen. Ebenso ließen sich die Bilddaten beispielsweise mit einer Bilddatenbank abgleichen, um bestimmte Düngersorten zu identifizieren, Korngrößenspektren durch Vergleich zu ermitteln und/oder zu Messergebnisse zu verifizieren. Dies ermöglicht eine für den Anwender gleichermaßen einfache als auch schnelle Analyse einer vorliegenden Düngerprobe.

Die gestellte Aufgabe wird ebenso mit einem Verfahren zum Ermitteln einer Einstellempfehlung für einen Düngerstreuer gelöst, das neben dem oben beschriebenen Verfahren ferner folgende Schritte umfasst:
f) Dateneingabe/-abfrage betreffend Typ und Streuscheibe des Düngerstreuers;
g) Abfrage einer Datenbank mit Soll-Einstellwerten für Düngerstreuer auf der Grundlage von Daten aus den Schritten e) und f); und
h) Ausgabe im Schritt g) ausgewählter Soll-Einstellwerte als Einstellempfehlung.

Angaben zu Typ und Streuscheibe des Düngerstreuers könnten sowohl manuell eingegeben werden als auch von einem Bordcomputer des verwendeten Düngerstreuers oder dergleichen abgefragt werden, beispielsweise mittels drahtloser Kommunikation zwischen einem Mobilfunkgerät und dem Bordcomputer. Die Einstellempfehlung können sämtliche für den Betrieb des jeweiligen Düngerstreuers relevanten Maschinenparameter umfassen.

Vorzugsweise werden in den Schritten f) und g) ferner Daten zur Düngerklasse eingegeben und abgefragt. Das erfindungsgemäße Verfahren eignet sich dann für unterschiedliche Düngerklassen. Ebenso denkbar ist eine Variante, die speziell für eine bestimmte Düngerklasse zugeschnitten ist, insbesondere für Harnstoffdünger, um die Bedienung und die Datenverarbeitung insgesamt zu vereinfachen.

Vorzugsweise werden die Schritte f) bis h) mit einem mobilen Rechner, insbesondere in einem programmierbaren Mobilfunkgerät, ausgeführt. Bestimmung der Korngröße und Ermitteln einer Einstellempfehlung lassen sich dann insbesondere bei wiederholter Verwendung derselben Düngerklasse und/oder desselben Düngerstreuers besonders schnell und effizient kombinieren. Die erfindungsgemäßen Funktionen lassen sich beispielsweise in einer Mobilfunk-Applikation bedienerfreundlich zusammenfassen.

Vorzugsweise umfasst der Schritt g) ferner Datenverkehr mit einem zentralen Düngeservice-Server, insbesondere mittels Mobilfunk. Dadurch lassen sich aktualisierte Daten und/oder Daten zu unterschiedlichen Düngerstreuern und Streuscheiben vor Ort abfragen und bei Bedarf für eine wiederholte Anwendung auf ein Mobilfunkgerät oder dergleichen übertragen.

Die gestellte Aufgabe wird ebenso mit einer Vorrichtung zum Bestimmen der Korngröße eines Düngers nach Anspruch 9 gelöst. Demnach umfasst diese:
- eine Messschale mit einer eine Messfläche begrenzenden Umrandung;
- eine Kamera zum Abbilden der Messfläche;
- eine Bildauswerteeinheit zum Ermitteln einer Fläche im Kamerabild, die von wenigstens einem Düngerkorn, insbesondere von der einlagigen Kornschicht, bedeckt ist; und
- eine Recheneinheit zum Berechnen der Korngröße aus dem abgemessenen Probenvolumen mittels Größenvergleich der ermittelten bedeckten Fläche und der Messfläche.

Die Messschale umfasst vorzugsweise eine Messfläche zum Aufnehmen eines Probenvolumens eines Düngers und zum Ausbilden einer einlagigen Kornschicht des Düngers, wobei die Messfläche von einer Seitenwand umrandet und der Übergang von der Messfläche zur Seitenwand scharfkantig ausgebildet ist mit einem Kantenradius von höchstens 1 mm. Dadurch lässt sich eine Umfangslinie der Messfläche im Kamerabild exakt bestimmen. Ferner können sich Düngerkörner dann in idealer Weise an der Seitenwand anlegen. Sowohl die Abmessungen der als Größenmaßstab dienenden Messfläche als auch die Abmessungen der vom Dünger bedeckten Fläche lassen sich dann besonders exakt in einem Kamerabild bestimmen.

Die Messschale umfasst vorzugsweise eine Messfläche zum Aufnehmen eines Probenvolumens eines Düngers und zum Ausbilden einer einlagigen Kornschicht des Düngers, wobei die Messfläche von einer Seitenwand umrandet und nicht heller ist als Graustufe 50%, wie beispielsweise 122 von 255 (weiß). Da die meisten handelsüblichen Düngersorten vergleichsweise hell sind, ist eine demgegenüber dunklere Messfläche besonders vorteilhaft für eine zuverlässige Messung der von der einlagigen Kornschicht abgedeckten Fläche. Auf dunklem Bildhintergrund lassen sich ferner durch Schattenwurf verursachte Auswertungsfehler minimieren.

Die Messfläche ist dann insbesondere im Wesentlichen gleichmäßig eingefärbt und/oder abgetönt. Neben und/oder auf der Messfläche können nichtsdestoweniger Hilfslinien, Raster oder dergleichen vorhanden sein, um die Vermessung der von den Düngerkörnern bedeckten Fläche zu erleichtern.

Graustufen im Sinne der Erfindung sind objektseitig definiert, also durch herstellungsbedingte Pigmentierung der Messfläche, Aufdruck oder dergleichen, nicht bildseitig, da die im Kamerabild letzten Endes resultierenden Graustufen von den jeweiligen Lichtverhältnissen, Aufnahmeparametern oder dergleichen abhängen.

Vorzugsweise unterscheiden sich die Messfläche und die Umrandung hinsichtlich Farbe und/oder Graustufe. Dies erleichtert das Erkennen und/oder Vermessen der Messfläche im Kamerabild. Ebenso lassen sich dadurch perspektivische und/oder durch das Kameraobjektiv verursachte Verzerrungen im Kamerabild einfacher feststellen und berücksichtigen.

Vorzugsweise ist die Messfläche in Form einer austauschbaren und/oder wendbaren Einlegeplatte ausgebildet, und/oder es sind unterschiedlich gefärbte und/oder unterschiedlich helle Messflächen nebeneinander und/oder auf einander entgegen gesetzten Seiten der Messschale vorhanden. Damit lässt sich der Bildkontrast zwischen Messfläche und Dünger an unterschiedliche Düngerklassen/-sorten anpassen.

Die Messfläche ist vorzugsweise 10 bis 200 cm² groß. Diese Abmessungen eignen sich besonders für handelsübliche Dünger mit Korngrößen von etwa 1 bis 3 mm und ermöglichen zudem eine gute Handhabung des benötigten Probenvolumens in Messbechern oder dergleichen. Die Messfläche ist vorzugsweise eben.

Die erfindungsgemäße Vorrichtung eignet sich insbesondere auch zum Ermitteln einer Einstellempfehlung für einen Düngerstreuer.

Vorzugsweise sind die Kamera, und insbesondere auch die Bildauswerteeinheit und die Recheneinheit, in ein programmierbares Mobilfunkgerät integriert. Insbesondere mittels Mobilfunkapplikation lassen sich dann Eingabe und Ausgabe, Bildaufnahme und Bildauswertung, sowie der zugehörige Datenverkehr einfach und flexibel in herkömmlichen Mobilfunkgeräten, insbesondere Mobilfunktelefonen, ausführen.

Die gestellte Aufgabe wird ebenso mit einem digitalen Programm nach Anspruch 15 gelöst, das insbesondere eine Applikation für ein Mobilfunkgerät ist. Demnach eignet sich das erfindungsgemäße digitale Programm zur Bestimmung der Korngröße eines Düngers, insbesondere eines Harnstoffdüngers, und umfasst Befehle, die bei der Ausführung des Programms durch einen Computer diesen veranlassen, die im Anspruch 15 definierten Schritte auszuführen.

Vorzugsweise ist das digitale Programm ferner zum Ausführen der im Anspruch 16 definierten Schritte zum Ermitteln einer Einstellempfehlung für einen Düngerstreuer ausgebildet.

Bevorzugte Ausführungsformen der Erfindung sind in der Zeichnung dargestellt. Es zeigen:
Fig. 1 eine schematische Darstellung einer Vorrichtung zum Bestimmen einer Korngröße eines Düngers;
Fig. 2 eine Draufsicht auf eine erfindungsgemäß Messschale;
Fig. 3 ein Ablaufschema eines erfindungsgemäßen Verfahrens zur Bestimmung einer Korngröße eines Düngers; und
Fig. 4 ein Ablaufschema eines erfindungsgemäßen Verfahrens zum Ermitteln einer Einstellempfehlung für einen Düngerstreuer.

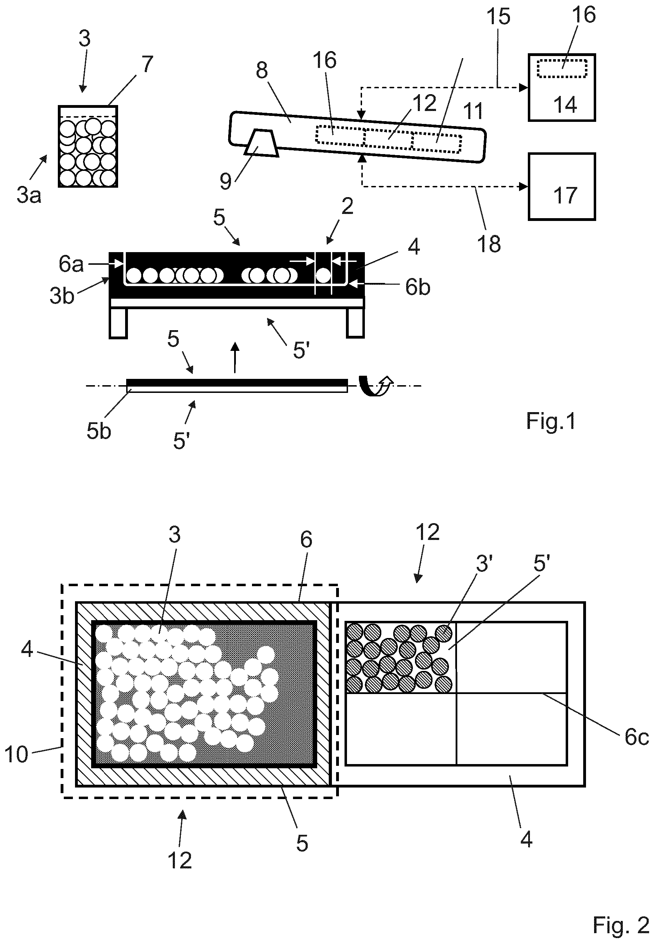

Wie die Figur 1 erkennen lässt, umfasst eine erfindungsgemäße Vorrichtung 1 zum Bestimmen der Korngröße 2 eines Düngers 3 eine Messschale 4 mit einer eine Messfläche 5 begrenzenden Umrandung 6. Letztere umfasst wenigstens eine Seitenwand 6a, die scharfkantig an die Messfläche 5 anschließt, beispielsweise mit einem (lediglich schematisch angedeuteten) Kantenradius 6b von höchstens 1 mm. Erfindungsgemäß wird ein Probenvolumen 3a des Düngers 3 in einem Messbecher 7 oder dergleichen abgemessen, in die Messschale 4 geleert und auf der Messfläche 5 zu einer einlagigen Kornschicht 3b verteilt, beispielsweise durch vorübergehendes Rütteln und/oder Verkippen der Messschale 4 (nicht dargestellt).

Die Vorrichtung 1 umfasst vorzugsweise ein Mobilfunkgerät 8, in das eine Kamera 9 integriert ist. Wie in der Figur 2 gestrichelt angedeutet ist, wird mit der Kamera 9 wenigstens ein Kamerabild 10 in einer Draufsicht auf die Messfläche 5 mit deren Umrandung 6 und mit der einlagigen Kornschicht 3b aufgenommen. Der Bereich der erfindungsgemäß verwendeten Messfläche 5 wird in dem Kamerabild 10 vorzugsweise vollständig abgebildet. Die abgebildete Messfläche 5 und/oder Umrandung 6 dienen als Größenmaßstab für die abgebildete einlagige Kornschicht 3b. Zu diesem Zweck kann die erfindungsgemäße Umrandung 6 teilumfänglich wenigstens eine auf der Messfläche 5 ausgebildete Hilfslinie 6c umfassen, um eine an die Düngerprobe angepasste Messfläche 5 auf der Messschale 4 auszubilden. Ebenso könnte ein teilumfänglicher Bereich der Seitenwand 6a durch eine Hilfslinie ersetzt werden (bei nicht dargestellter seitlich offener Messfläche).

Zur Bildauswertung des wenigstens einen Kamerabilds 10 ist eine Bildauswerteeinheit 11 vorgesehen, die vorzugsweise in das Mobilfunkgerät 8 integriert ist. Die Bildauswerteeinheit 11 dient dazu, eine von wenigstens einem Düngerkorn, insbesondere aber von der einlagigen

Kornschicht 3b insgesamt, bedeckte Fläche 12 von der Messfläche 5 zu unterscheiden. Um die bedeckte Fläche 12 einzugrenzen, wird ein Bildkontrastunterschied zwischen der einlagigen Kornschicht 3b und der Messfläche 5 im Sinne eines Schwellenwerts oder eines funktionell entsprechenden Entscheidungskriteriums verwendet. Insbesondere ermittelt die Bildauswerteeinheit 11 dann die Größen der Messfläche 5 und der bedeckten Fläche 12 im Kamerabild 10 und berechnet den Anteil der bedeckten Fläche 12 an der Messfläche 5.

Ferner ist eine Recheneinheit 13 vorhanden, die aus dem berechneten bedeckten Flächenanteil mittels einer hinterlegten Korrelationsfunktion oder dergleichen Algorithmus die Korngröße 2 des Düngers 3 bestimmt. Je nach Bildverarbeitungsverfahren kann die insgesamt bedeckte Fläche 12 berechnet werden und/oder von einzelnen Düngerkörnern bedeckte Flächen abgegrenzt und berechnet werden. Aus der vom Dünger 3 insgesamt bedeckten Fläche 12 lässt sich vorzugsweise eine mittlere Korngröße des Düngers 3 berechnen. Aus von einzelnen Düngerkörnern bedeckten Flächen lässt sich vorzugsweise ein Korngrößenspektrum berechnen. Ebenso wäre es denkbar, eine mittlere Korngröße aus der insgesamt bedeckten Fläche 12 zu berechnen und zusätzlich lediglich nach den kleinsten und größten Düngerkörnern zu suchen. Aus deren Größen ließe sich dann beispielsweise in Kombination mit der mittleren Korngröße ein Korngrößenspektrum abschätzen.

Die Integration der Bildauswerteeinheit 11 und der Recheneinheit 13 in das Mobilfunkgerät 8, das beispielsweise ein Mobiltelefon ist, ermöglicht eine eigenständige Bestimmung der Korngröße 2 vor Ort. Es wäre jedoch auch denkbar, Berechnungsschritte und/oder Vergleichsdaten in einem zentralen Düngeservice-Server 14 auszuführen bzw. vorzuhalten. Es wäre dann ausreichend mit dem Mobilfunkgerät 8 das wenigstens eine Kamerabild 10 aufzunehmen und einen bidirektionalen Datenverkehr 15 zwischen dem Mobilfunkgerät 8 und dem Düngeservice-Server 14 zu gewährleisten, um Bilddaten und Berechnungsdaten zu übermitteln. Das Berechnungsergebnis kann dann schließlich von dem Mobilfunkgerät 8 angezeigt werden (nicht dargestellt).

Vorzugsweise ist die erfindungsgemäße Vorrichtung 1 ferner zum Ermitteln einer Einstellempfehlung für einen Düngerstreuer in Abhängigkeit von der berechneten Korngröße 2 ausgebildet. Zu diesem Zweck wird eine Datenbank 16 mit SollEinstellwerten (Maschinenparametern) für Düngerstreuer und/oder Streuscheiben abgefragt. Die Datenbank 16 ist beispielsweise in das Mobilfunkgerät 8 integriert. Ebenso könnte die Datenbank 16 von dem Düngeservice-Server 14 bereitgestellt werden. Die Abfrage der Datenbank 16 erfolgt in Abhängigkeit vom Typ des Düngerstreuers und der verwendeten Streuscheibe, wobei die Typen sowohl manuell am Mobilfunkgerät 8 eingegeben als auch von dem Düngerstreuer abgefragt werden können.

Letzteres ist in der Figur 1 durch einen dem Düngerstreuer zugeordneten Bordcomputer 17 und einen Datenverkehr 18, beispielsweise mittels Bluetooth, WLAN odergleichen, schematisch angedeutet. Bei bidirektionalem Datenverkehr 18 kann die ermittelte Einstellempfehlung vom Mobilfunkgerät 8 an den Bordcomputer 17 des Düngerstreuers übertragen werden. Vorzugsweise übernimmt der Bordcomputer 17 die empfangene Einstellempfehlung automatisch als Ist-Einstellung des Düngerstreuers oder als Eingabevorschlag zur Änderung der Ist-Einstellung.

Je nach Anwendungsbereich lässt sich das Mobilfunkgerät 8 mit einer MobilfunkApplikation zielgerichtet programmieren, um entweder eine flexible Bestimmung der Korngröße 2 und Einstellempfehlung für unterschiedliche Düngerklassen bereitzustellen oder eine maßgeschneiderte Berechnung der Korngröße 2 und Einstellempfehlung für eine bestimmte Düngerklasse, insbesondere für Harnstoffdünger.

In der Figur 1 ist schematisch angedeutet, dass die erfindungsgemäße Messschale 4 wenigstens eine weitere Messfläche 5' umfassen kann, die sich hinsichtlich Farbe und/oder Graustufe von der Messfläche 5 unterscheidet. In der Figur 1 ist die weitere Messfläche 5' auf der der Messfläche 5 entgegengesetzten Seite der Messschale 4 angeordnet, in der Figur 2 dagegen auf derselben Seite neben der Messfläche 5. In beiden Fällen ist die weitere Messfläche 5' beispielhaft als helle Fläche dargestellt, so dass sich ein Dünger 3' einer vergleichsweise dunklen Sorte gegenüber der weiteren Messfläche 5' dunkel abzeichnet.

Ergänzend oder alternativ dazu kann die Messfläche 5 auf einer auswechselbaren Einlegeplatte 5b ausgebildet werden, ebenso die davon hinsichtlich Farbe und/oder Graustufe abweichende weitere Messfläche 5'. Eine geeignete Einlegeplatte 5b wird dann je nach Helligkeit und/oder Farbe des zu untersuchenden Düngers 3 in die Messschale 4 eingesetzt oder gewendet.

Wie insbesondere die Figur 2 erkennen lässt, kann sich die Umrandung 6 hinsichtlich Farbe und/oder Graustufe von der Messfläche 5 unterscheiden, um die Begrenzung der Messfläche 5 besonders zuverlässig zu erkennen und/oder um den Verlauf der Umrandung 6 im Kamerabild 10 zu analysieren. Dadurch lassen sich perspektivische Verzerrungen, verursacht durch Abweichungen von einer mittigen orthogonalen Draufsicht, und durch das Kameraobjektiv verursachte Verzerrungen bei der Berechnung der abgedeckten Fläche 12 berücksichtigen.

Da die meisten Düngerklassen eine vergleichsweise helle Färbung aufweisen, ist für die Messfläche 5 eine Graustufe nicht heller als 50% vorteilhaft. Ebenso ließen sich Messflächen 5 mit einer vom zu untersuchenden Dünger 3 abweichenden Farbe ausbilden, beispielsweise einer dazu im Wesentlichen komplementären Farbe oder dergleichen.

Rechteckig geformte, segmentierte und/oder gerasterte Messflächen 5 eignen sich besonders gut zur Wiedergabe in Kamerabildern 10. Außerdem lassen sich perspektivische Verzerrungen oder dergleichen dann an der Umrandung 6 und/oder den Hilfslinien 6c besonders gut erkennen. Die bevorzugte Größe der Messfläche 5 liegt zwischen 10 und 200 cm2. Ebene Messflächen 5 begünstigen das erfindungsgemäße Ausbilden einer einlagigen Kornschicht 3b.

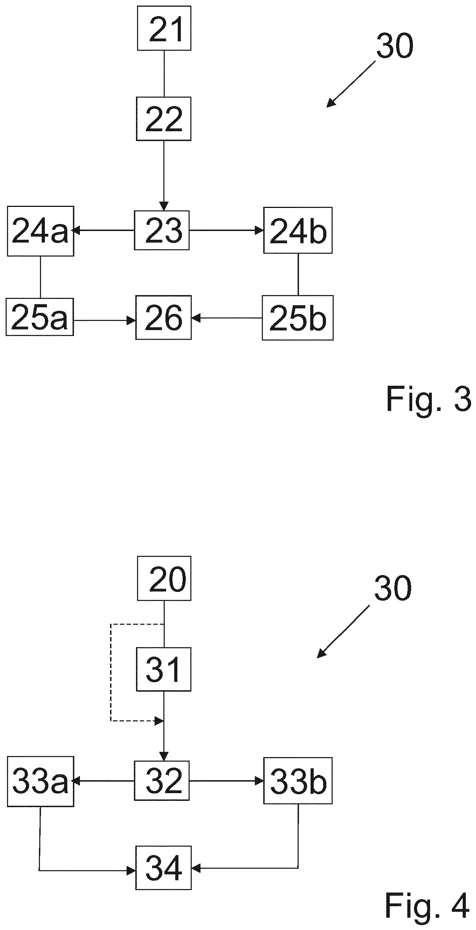

Die Figur 3 zeigt ein Ablaufschema eines bevorzugten Verfahrens 20 zur Korngrößenbestimmung eines Düngers 3. Demnach wird in einem ersten Schritt 21 ein vorgegebenes Probenvolumen 3a des Düngers 3 abgemessen. In einem nachfolgenden Schritt 22 wird das Probenvolumen 3a einlagig auf der Messfläche 5 verteilt und die einlagige Kornschicht 3b ausgebildet. In einem nachfolgenden Schritt 23 wird die einlagige Kornschicht 3b und die als Größenmaßstab zu verwendende Messfläche 5 in wenigstens einem Kamerabild 10 in der Draufsicht aufgenommen.

Danach wird das Kamerabild 10 entweder in einem Schritt 24a mittels einer Mobilfunk-Applikation ausgewertet oder in einem alternativen Schritt 24b zu einem Düngeservice-Server 14 geschickt, beispielsweise mittels Datenverkehr 15 im Mobilfunk, um das Kamerabild dort auszuwerten.

Die anschließende Berechnung der Korngröße 2 erfolgt dann entweder im Schritt 25a mittels Mobilfunk-Applikation im Mobilfunkgerät 8 oder alternativ im Schritt 25b im Düngeservice-Server 14. Vorzugsweise erfolgt die Ausgabe der berechneten Korngröße 2 und/oder eines Korngrößenspektrums im Schritt 26 mittels Mobilfunk-Applikation.

Ebenso lässt sich die berechnete Korngröße 2 unmittelbar als Eingangsgröße für ein Verfahren 30 zum Ermitteln einer Einstellempfehlung für einen Düngerstreuer integrieren, das schematisch im Ablaufschema der Figur 4 dargestellt ist. Demnach folgt auf die oben beschriebenen Schritte ein optionaler Schritt 31 zur Auswahl der Düngerklasse. Falls das Verfahren 30 für eine bestimmte Düngerklasse optimiert ist, wie beispielsweise für Harnstoffdünger, kann der Schritt 31 entfallen.

Anschließend wird der Typ des Düngerstreuers und der Streuscheibe im Schritt 32 eingegeben oder abgefragt. Eine Eingabe erfolgt vorzugsweise manuell mittels Mobilfunkapplikation. Eine Abfrage könnte automatisch vom Bordcomputer 17 eines Düngerstreuers erfolgen.

Auf der Grundlage derart berechneter, abgefragter und/oder eingegebener Daten wird anschließend eine Datenbank 16 mit empfohlenen Einstellwerten von Düngerstreuern und Streuscheiben für das Ausstreuen von Düngern unterschiedlicher Korngrößen abgefragt, um beispielsweise eine gewünschte Arbeitsbreite mit dem Düngerstreuer zu erzielen. Die Datenbank 16 kann gemäß Schritt 33a im Mobilfunkgerät 8 vorhanden sein oder gemäß Schritt 33b im Bereich des zentralen Düngeservice-Servers 14. Entscheidend ist, dass diese Abfrage auf der Grundlage der zuvor erfindungsgemäß ermittelten Korngröße 2 erfolgt.

Die im Schritt 33a oder 33b ausgewählte Einstellempfehlung wird im Schritt 34 am Mobilfunkgerät 8 ausgegeben und/oder an den Bordcomputer 17 des Düngerstreuers übertragen. Im letzteren Fall lässt sich die Einstellempfehlung automatisch als Ist-Einstellwert des Düngerstreuers übernehmen.

Die Erfindung wurde beispielhaft anhand eines Mobilfunkgeräts 8 beschrieben, das beispielsweise ein Mobilfunktelefon ist. Stattdessen könnten prinzipiell beliebige mobile und kommunikationsfähige Rechner, wie Notebooks, Tablet-PC oder dergleichen zur Bildauswertung, Berechnung der Korngröße, Datenbankabfrage und Ausgabe von berechneten Korngrößen und/oder Einstellempfehlungen verwendet werden. Ebenso ließen sich beliebige Kameras an derartige mobile Rechner anschließen oder in diese integrieren. Der Datenverkehr mit dem Düngeservice-Server 14 lässt sich prinzipiell über beliebige Heimnetzwerke, Telefonleitungen oder dergleichen bewerkstelligen.

## Patentansprüche

1. Verfahren zur Bestimmung der Korngröße (2) eines Düngers (3), insbesondere eines Harnstoffdüngers, mit den Schritten:
a) Abmessen eines Probenvolumens (3a) des Düngers (3);
b) Einfüllen des Probenvolumens (3a) in eine Messschale (4) mit einer eine Messfläche (5) begrenzenden Umrandung (6), und Verteilen des Probenvolumens (3a) auf der Messfläche (5) zu einer einlagigen Kornschicht (3b);
c) Abbilden der Umrandung (6) und der Messfläche (5) mit der einlagigen Kornschicht (3b) in wenigstens einem digitalen Kamerabild (10);
d) Berechnen einer von wenigstens einem Düngerkorn, insbesondere der von der einlagigen Kornschicht (3b), im Kamerabild (10) bedeckten Fläche (12); und
e) Berechnen der Korngröße (2), insbesondere einer mittleren Korngröße und/oder einer Korngrößenverteilung des Düngers (3), aus dem abgemessenen Probenvolumen mittels Größenvergleich der bedeckten Fläche (12) und der Messfläche (5).

2. Verfahren nach Anspruch 1, wobei sich der Dünger (3) von der Messfläche (5), und insbesondere auch von der Umrandung (6), hinsichtlich Farbe und/oder Graustufe unterscheidet, und wobei ein dadurch verursachter Bildkontrast im Schritt d) ausgewertet wird.

3. Verfahren nach Anspruch 1 oder 2, wobei die Schritte c) bis e) mit einem mobilen Rechner, insbesondere in einem programmierbaren Mobilfunkgerät (8), ausgeführt werden.

4. Verfahren nach Anspruch 1 oder 2, wobei im Schritt c) gewonnene Bilddaten, insbesondere mittels Mobilfunk, an einen zentralen Düngeservice-Server (14) übermittelt werden, und wobei dieser wenigstens einen der Schritte d) und e) ausführt.

5. Verfahren zum Ermitteln einer Einstellempfehlung für einen Düngerstreuer, mit dem Verfahren nach wenigstens einem der vorigen Ansprüche, und ferner mit den Schritten:
f) Dateneingabe/-abfrage betreffend Typ und Streuscheibe des Düngerstreuers; und
g) Abfrage einer Datenbank (16) mit Soll-Einstellwerten für Düngerstreuer, auf der Grundlage von Daten aus den Schritten e) und f); und
h) Ausgabe im Schritt g) ausgewählter Soll-Einstellwerte als Einstellempfehlung.

6. Verfahren nach Anspruch 5, wobei in den Schritten f) und g) ferner Daten zur Düngerklasse eingegeben und abgefragt werden.

7. Verfahren nach Anspruch 5 oder 6, wobei die Schritte f) bis h) mit einem mobilen Rechner, insbesondere in einem programmierbaren Mobilfunkgerät (8), ausgeführt werden.

8. Verfahren nach Anspruch 6 oder 7, wobei der Schritt g) ferner Datenverkehr (15) mit einem zentralen Düngeservice-Server (14) umfasst, insbesondere mittels Mobilfunk.

9. Vorrichtung (1) zum Bestimmen der Korngröße (2) eines Düngers (3), insbesondere eines Harnstoffdüngers, aus einem abgemessenen Probenvolumen (3a) des Düngers (3), umfassend:
- eine Messschale (4) mit einer von einer Umrandung (6) begrenzten Messfläche zum Aufnehmen des Probenvolumens (3a) und zum Ausbilden einer einlagigen Kornschicht (3b) des Düngers (3);
- eine Kamera (10), ausgebildet zum Abbilden der Messfläche (5);
- eine Bildauswerteeinheit (11), ausgebildet zum Ermitteln einer Fläche (12) in wenigstens einem Kamerabild (10), die von wenigstens einem Düngerkorn, insbesondere von der einlagigen Kornschicht (3b), bedeckt ist; und
- eine Recheneinheit (12), ausgebildet zum Berechnen der Korngröße (2) aus dem abgemessenen Probenvolumen mittels Größenvergleich der ermittelten bedeckten Fläche (12) und der Messfläche (5).

10. Vorrichtung nach Anspruch 9, wobei die Messfläche (5) von einer Seitenwand (6a) umrandet ist, und wobei der Übergang von der Messfläche (5) zur Seitenwand (6a) scharfkantig ausgebildet ist mit einem Kantenradius (6c) von höchstens 1 mm.

11. Vorrichtung nach Anspruch 9 oder 10, wobei die Messfläche (5) nicht heller ist als Graustufe 50% und insbesondere im Wesentlichen gleichförmig einfärbt / abgetönt ist.

12. Vorrichtung nach Anspruch 9, 10 oder 11, wobei sich die Messfläche (5) und die Umrandung (6) hinsichtlich Farbe und/oder Graustufe unterscheiden.

13. Vorrichtung nach wenigstens einem der Ansprüche 9 bis 12, wobei die Messfläche (5) auf einer austauschbaren und/oder wendbaren Einlegeplatte (5b) ausgebildet ist, und/oder wobei unterschiedlich gefärbte und/oder unterschiedlich helle Messflächen (5, 5') nebeneinander und/oder auf einander entgegen gesetzten Seiten der Messschale (4) vorhanden sind.

14. Vorrichtung nach einem der Ansprüche 9 bis 13, wobei die Kamera (10), und insbesondere auch die Bildauswerteeinheit (11) und die Recheneinheit (12), in ein programmierbares Mobilfunkgerät (8) integriert ist.

15. Digitales Programm, insbesondere Applikation für ein Mobilfunkgerät (8), zur Bestimmung der Korngröße (2) eines Düngers (3), insbesondere eines Harnstoffdüngers, umfassend Befehle, die bei der Ausführung des Programms durch einen Computer diesen veranlassen, die folgenden Schritte auszuführen:
- Berechnen einer von wenigstens einem Düngerkorn, insbesondere der von einer einlagigen Kornschicht (3b), in einem digitalen Kamerabild (10) bedeckten Fläche (12), wobei in dem digitalen Kamerabild (10) eine Messfläche (5) begrenzende Umrandung (6) einer mit einem abgemessenen Probenvolumen des Düngers (3) gefüllten Messschale (4) und die Messfläche (5) mit dem zu einer einlagigen Kornschicht (3b) auf der Messfläche (5) verteilten Probenvolumen abgebildet ist; und
- Berechnen der Korngröße (2), insbesondere einer mittleren Korngröße und/oder einer Korngrößenverteilung des Düngers (3), aus dem abgemessenen Probenvolumen mittels Größenvergleich der bedeckten Fläche (12) und der Messfläche (5).

16. Digitales Programm nach Anspruch 15, das ferner zum Ausführen der folgenden Schritte zum Ermitteln einer Einstellempfehlung für einen Düngerstreuer ausgebildet ist:
- Dateneingabe/-abfrage betreffend Typ und Streuscheibe des Düngerstreuers;
- Abfrage einer Datenbank (16) mit Soll-Einstellwerten für Düngerstreuer, auf der Grundlage von Daten aus den Schritten zum Berechnen der Korngröße und zur Dateneingabe/-abfrage betreffend Typ und Streuscheibe; und
- Ausgabe im vorherigen Schritt ausgewählter Soll-Einstellwerte als Einstellempfehlung.

## Claims

1. Method for determining the grain size (2) of a fertiliser (3), in particular of a urea fertiliser, having the steps of:
a) measuring a sample volume (3a) of the fertiliser (3) ;
b) filling the sample volume (3a) into a measuring pan (4) having a border (6) which delimits a measurement area (5), and distributing the sample volume (3a) on the measurement area (5) to form a single-layer grain layer (3b);
c) imaging the border (6) and the measurement area (5) with the single-layer grain layer (3b) in at least one digital camera image (10);
d) calculating an area (12) covered by at least one fertiliser grain, in particular the area covered by the single-layer grain layer (3b), in the camera image (10); and
e) calculating the grain size (2), in particular an average grain size and/or a grain size distribution of the fertiliser (3), from the measured sample volume by comparing the sizes of the covered area (12) and the measurement area (5).

2. Method according to Claim 1, wherein the fertiliser (3) differs from the measurement area (5), and in particular also from the border (6), in terms of colour and/or greyscale, and wherein an image contrast caused thereby is evaluated in step d).

3. Method according to Claim 1 or 2, wherein steps c) to e) are carried out using a mobile computer, in particular in a programmable mobile radio device (8).

4. Method according to Claim 1 or 2, wherein image data obtained in step c) are transmitted to a central fertiliser service server (14), in particular by means of mobile radio, and wherein this server carries out at least one of steps d) and e).

5. Method for determining a recommended setting for a fertiliser spreader using the method according to at least one of the preceding claims and also having the steps of:
f) inputting/querying data relating to the type and spreading disc of the fertiliser spreader; and
g) querying a database (16) containing desired settings for fertiliser spreaders on the basis of data from steps e) and f); and
h) outputting desired settings selected in step g) as the recommended setting.

6. Method according to Claim 5, wherein data relating to the fertiliser class are also input and queried in steps f) and g).

7. Method according to Claim 5 or 6, wherein steps f) to h) are carried out using a mobile computer, in particular in a programmable mobile radio device (8).

8. Method according to Claim 6 or 7, wherein step g) also comprises data traffic (15) with a central fertiliser service server (14), in particular by means of mobile radio.

9. Apparatus (1) for determining the grain size (2) of a fertiliser (3), in particular of a urea fertiliser, from a measured sample volume (3a) of the fertiliser (3), comprising:
- a measuring pan (4) having a measurement area which is delimited by a border (6) and is intended to receive the sample volume (3a) and to form a single-layer grain layer (3b) of the fertiliser (3);
- a camera (10) designed to image the measurement area (5) ;
- an image evaluation unit (11) designed to determine an area (12) in at least one camera image (10), which area is covered by at least one fertiliser grain, in particular by the single-layer grain layer (3b); and
- a computing unit (12) designed to calculate the grain size (2) from the measured sample volume by comparing the sizes of the determined covered area (12) and the measurement area (5).

10. Apparatus according to Claim 9, wherein the measurement area (5) is bordered by a side wall (6a), and wherein the transition from the measurement area (5) to the side wall (6a) has sharp edges and has an edge radius (6c) of at most 1 mm.

11. Apparatus according to Claim 9 or 10, wherein the measurement area (5) is not brighter than the greyscale of 50% and, in particular, is substantially uniformly coloured/shaded.

12. Apparatus according to Claim 9, 10 or 11, wherein the measurement area (5) and the border (6) differ in terms of colour and/or greyscale.

13. Apparatus according to at least one of Claims 9 to 12, wherein the measurement area (5) is formed on an exchangeable and/or reversible insertion plate (5b), and/or wherein measurement areas (5, 5') of different colours and/or different brightness are present beside one another and/or on mutually opposite sides of the measuring pan (4).

14. Apparatus according to one of Claims 9 to 13, wherein the camera (10), and in particular also the image evaluation unit (11) and the computing unit (12), is integrated in a programmable mobile radio device (8) .

15. Digital program, in particular application for a mobile radio device (8), for determining the grain size (2) of a fertiliser (3), in particular of a urea fertiliser, comprising instructions which, during execution of the program by a computer, cause the latter to carry out the following steps:
- calculating an area (12) covered by at least one fertiliser grain, in particular the area covered by a single-layer grain layer (3b), in a digital camera image (10), wherein a border (6) of a measuring pan (4) filled with a measured sample volume of the fertiliser (3), which border delimits a measurement area (5), and the measurement area (5) having the sample volume distributed to form a single-layer grain layer (3b) on the measurement area (5) are imaged in the digital camera image (10); and
- calculating the grain size (2), in particular an average grain size and/or a grain size distribution of the fertiliser (3), from the measured sample volume by comparing the sizes of the covered area (12) and the measurement area (5).

16. Digital program according to Claim 15 which is also designed to carry out the following steps for determining a recommended setting for a fertiliser spreader:
- inputting/querying data relating to the type and spreading disc of the fertiliser spreader;
- querying a database (16) containing desired settings for fertiliser spreaders on the basis of data from the steps for calculating the grain size and for inputting/querying data relating to the type and spreading disc; and
- outputting desired settings selected in the previous step as a recommended setting.

## Revendications

1. Procédé de détermination de la grosseur de grain (2) d'un engrais (3), en particulier d'un engrais à base d'urée, comprenant les étapes consistant à :
a) mesurer un volume d'échantillon (3a) de l'engrais (3) ;
b) remplir une coupelle de mesure (4) pourvue d'une bordure (6) délimitant une surface de mesure (5) avec le volume d'échantillon (3a) et répartir le volume d'échantillon (3a) sur la surface de mesure (5) pour former une couche de grains monocouche (3b) ;
c) prendre une image de la bordure (6) et de la surface de mesure (5) comportant la couche de grains monocouche (3b) pour obtenir au moins une image de caméra numérique (10) ;
d) calculer une superficie (12) qui est recouverte, dans l'image de caméra (10), par au moins un grain d'engrais, en particulier par la couche de grains monocouche (3b) ; et
e) calculer la grosseur de grain (2), en particulier une grosseur de grain moyenne et/ou une distribution de la grosseur de grain de l'engrais (3), à partir du volume d'échantillon mesuré, au moyen d'une comparaison de taille entre la surface recouverte (12) et la surface de mesure (5).

2. Procédé selon la revendication 1, dans lequel l'engrais (3) se distingue de la surface de mesure (5), et en particulier également de la bordure (6), par la couleur et/ou le niveau de gris, et dans lequel un contraste d'image ainsi provoqué est évalué à l'étape d) .

3. Procédé selon la revendication 1 ou 2, dans lequel les étapes c) à e) sont exécutées à l'aide d'un ordinateur mobile, en particulier dans un appareil radio mobile programmable (8).

4. Procédé selon la revendication 1 ou 2, dans lequel les données d'image obtenues à l'étape c) sont transmises, en particulier par radio mobile, à un serveur central de service des engrais (14), et dans lequel ce dernier exécute au moins l'une des étapes d) et e) .

5. Procédé de détermination d'une recommandation d'ajustement pour un épandeur d'engrais, à l'aide du procédé selon au moins l'une des revendications précédentes, et comprenant en outre les étapes consistant à :
f) saisir/demander des données relatives au type et au disque d'épandage de l'épandeur d'engrais ; et
g) interroger une base de données (16) contenant des valeurs d'ajustement nominales pour les épandeurs d'engrais, sur la base de données issues des étapes e) et f) ; et
h) délivrer en tant que recommandation d'ajustement des valeurs d'ajustement nominales sélectionnées à l'étape g).

6. Procédé selon la revendication 5, dans lequel, aux étapes f) et g), des données relatives à la classe d'engrais sont également saisies et demandées.

7. Procédé selon la revendication 5 ou 6, dans lequel les étapes f) à h) sont exécutées à l'aide d'un ordinateur mobile, en particulier dans un appareil radio mobile programmable (8).

8. Procédé selon la revendication 6 ou 7, dans lequel l'étape g) comprend en outre un échange de données (15) avec un serveur central de service des engrais (14), en particulier par radio mobile.

9. Dispositif (1) de détermination de la grosseur de grain (2) d'un engrais (3), en particulier d'un engrais à base d'urée, à partir d'un volume d'échantillon mesuré (3a) de l'engrais (3), comprenant :
- une coupelle de mesure (4) pourvue d'une surface de mesure délimitée par une bordure (6) pour recevoir le volume d'échantillon (3a) et pour former une couche de grains monocouche (3b) de l'engrais (3) ;
- une caméra (10) conçue pour prendre une image de la surface de mesure (5) ;
- une unité d'évaluation d'image (11), conçue pour déterminer, dans au moins une image de caméra (10), une superficie (12) qui est recouverte par au moins un grain d'engrais, en particulier par la couche de grains monocouche (3b) ; et
- une unité de calcul (12), conçue pour calculer la grosseur de grain (2) à partir du volume d'échantillon mesuré, au moyen d'une comparaison de taille entre la surface recouverte (12) déterminée et la surface de mesure (5).

10. Dispositif selon la revendication 9, dans lequel la surface de mesure (5) est bordée par une paroi latérale (6a), et dans lequel la transition entre la surface de mesure (5) et la paroi latérale (6a) est réalisée avec des arêtes vives et un rayon d'arête (6c) maximal de 1 mm.

11. Dispositif selon la revendication 9 ou 10, dans lequel la surface de mesure (5) présente une luminosité ne dépassant pas 50 % de l'échelle de gris et présente en particulier une coloration/teinte sensiblement uniforme.

12. Dispositif selon la revendication 9, 10 ou 11, dans lequel la surface de mesure (5) et la bordure (6) se distinguent par la couleur et/ou le niveau de gris.

13. Dispositif selon au moins l'une des revendications 9 à 12, dans lequel la surface de mesure (5) est réalisée sur une plaque d'insertion (5b) interchangeable et/ou réversible et/ou dans lequel des surfaces de mesure (5, 5') de couleurs différentes et/ou de luminosité différente sont présentes côte à côte et/ou sur des côtés opposés de la coupelle de mesure (4).

14. Dispositif selon l'une des revendications 9 à 13, dans lequel la caméra (10), et également en particulier l'unité d'évaluation d'image (11) et l'unité de calcul (12), sont intégrées dans un appareil radio mobile programmable (8) .

15. Programme numérique, en particulier application destinée à un appareil radio mobile (8), destiné à déterminer la grosseur de grain (2) d'un engrais (3), en particulier d'un engrais à base d'urée, comprenant des instructions qui, lorsque le programme est exécuté par un ordinateur, amènent l'ordinateur à exécuter les étapes consistant à :
- calculer une superficie (12) qui est recouverte, dans une image de caméra numérique (10), par au moins un grain d'engrais, en particulier par une couche de grains monocouche (3b), dans lequel, dans l'image de caméra numérique (10), on prend une image d'une bordure (6) d'une coupelle de mesure (4) remplie avec un volume d'échantillon mesuré de l'engrais (3), qui délimite une surface de mesure (5), et de la surface de mesure (5) comportant le volume d'échantillon réparti sur la surface de mesure (5) pour former une couche de grains monocouche (3b) ; et
- calculer la grosseur de grain (2), en particulier une grosseur de grain moyenne et/ou une distribution de la grosseur de grain de l'engrais (3), à partir du volume d'échantillon mesuré, au moyen d'une comparaison de taille entre la surface recouverte (12) et la surface de mesure (5).

16. Programme numérique selon la revendication 15, qui est en outre conçu, afin de déterminer une recommandation d'ajustement pour un épandeur d'engrais, pour exécuter les étapes consistant à :
- saisir/demander des données relatives au type et au disque d'épandage de l'épandeur d'engrais ;
- interroger une base de données (16) contenant des valeurs d'ajustement nominales pour les épandeurs d'engrais, sur la base de données issues des étapes consistant à calculer la grosseur de grain et à saisir/demander des données relatives au type et au disque d'épandage ; et
- délivrer en tant que recommandation d'ajustement des valeurs d'ajustement nominales sélectionnés à l'étape précédente.
